Europäisches Patentamt

European Patent Office

Office européen des brevets

(11) Veröffentlichungsnummer: **0 166 255**
A1

# EUROPÄISCHE PATENTANMELDUNG

(21) Anmeldenummer: 85106613.4

(22) Anmeldetag: 29.05.85

(51) Int. Cl.⁴: **F 25 B 39/02**, G 01 M 3/32

(30) Priorität: 12.06.84 DE 3421749

(43) Veröffentlichungstag der Anmeldung: 02.01.86
Patentblatt 86/1

(84) Benannte Vertragsstaaten: AT BE CH DE FR IT LI SE

(71) Anmelder: KKW Kulmbacher Klimageräte-Werk GmbH,
Postfach 1569, D-8650 Kulmbach (DE)

(72) Erfinder: Rodecker, Artur, Dipl.-Ing.,
Wickenreutherallee 46, D-8650 Kulmbach (DE)
Erfinder: Meserth, Rudolf, Dipl.-Ing.,
Friedrich-Ebert-Strasse 3d, D-8650 Kulmbach (DE)

(74) Vertreter: Mehl, Ernst, Dipl.-Ing. et al, Postfach 22 01 76,
D-8000 München 22 (DE)

(54) Wasser- Wasser- Wärmepumpe.

(57) Offenbart wird eine Wasser-Wasser-Wärmepumpe, mit einem Kältemittel-Verdampfer, der in einem Mantelrohr (5) mindestens ein von einem Innenrohr (1) und einem Mittelrohr (3) gebildeten Ringraum (2) und zwischen dem Mittelrohr (3) und dem Mantelrohr (5) einen Durchflußraum (4) aufweist. Der Ringraum (2) ist mit einem unter Druck stehenden Gas gefüllt. Das Innenrohr (1) ist zur Wasserführung ausgebildet und der Durchflußraum (4) zur Führung des Kältemittels oder umgekehrt. Um eine Gefahr des Eindringens von Wasser in das Kältemittel frühzeitig erkennen zu können, ist ein Signalgeber (7) vorgesehen, der anspricht, wenn durch eine Leckage des jeweils vom Wasser beaufschlagten Rohres (1 oder 3), unter Druckverlust, Gas aus dem Ringraum (2) in das Wasser austritt. Das Ansprechen des Signalgebers (7) erfolgt lange bevor in den Ringraum (2) eingedrungenes Wasser ein Leckwerden derjenigen Rohrwand verursachen kann, die das in den Ringraum (2) eingedrungene Wasser von dem Kältemittel trennt. Das vom Signalgeber (7) ausgehende Signal kann zur akustischen oder optischen Anzeige des herrschenden Betriebszustandes oder zum Abschalten der Wärmepumpe verwendet werden.

0166255

KKW Kulmbacher Klimageräte-
Werk GmbH

Unser Zeichen
VPA 84 P 6 6 0 4 E

**Wasser- Wasser- Wärmepumpe**

Die Erfindung bezieht sich auf eine Wasser- Wasser-
Wärmepumpe der im Oberbegriff des Anspruches 1 genannten Art.

Es ist bereits eine Wasser- Wasser- Wärmepumpe der
im Oberbegriff des Anspruches 1 genannten Art bekannt, bei der das Innenrohr und der Durchflußraum
zur Führung von Wasser vorgesehen sind, während der
Ringraum zur Führung von Kältemittel ausgebildet
ist. Wenn das Innenrohr und das Mittelrohr durch
Angriff des Wassers leck werden, tritt Wasser in
den Ringraum ein, wodurch die Wärmepumpe unbrauchbar werden kann (DE-OS 31 o1 138).

Es ist bei Wärmepumpen auch eine Anordnung bekannt,
bei der ein in Brauchwasser liegendes Rohr eines
Kondensators mit Zwischenraum koaxial ein kältemittelführendes Innenrohr umschließt. Die Anordnung ist so getroffen, daß von außen optisch erkennbar wird, wenn in den Zwischenraum Brauchwasser eindringt. Zur besseren Übertragung der Wärme von dem
das Kältemittel führenden Rohr auf das Brauchwasser
kann der Zwischenraum auch mit einem gut wärmeleitenden Gas gefüllt sein (DE-OS 29 31 6o6).

Aufgabe der Erfindung ist es, die Wasser- Wasser-
Wärmepumpe der im Oberbegriff des Anspruches 1 genannten Art so auszubilden, daß bei einer Gefahr
des Eindringens von Wasser in das Kältemittel ein
Signal abgegeben wird, das nach freier Wahl zu einer Bec 25 Bes / o4.o5.1984 optischen Anzeige und/oder zu einer akustischen Anzeige oder aber zu einer Schalthandlung, zum Beispiel zum Abschalten der Wärmepumpe, verwendbar ist.

Die gestellte Aufgabe wird erfindungsgemäß durch die im kennzeichnenden Teil des Anspruches 1 angegebene Ausbildung gelöst.

Zweckmäßige Weiterbildungen des Erfindungsgegenstandes sind in den Ansprüchen 2 bis 4 angegeben.

Die gefundene Lösung hat den Vorteil, daß ein bei einer Leckage des wasserführenden Rohres durch Druckverlust im Ringraum vom Signalgeber ausgehendes Signal an eine beliebige Stelle weiterleitbar ist, während bei der bekannten Einrichtung eine Leckage nur im näheren Umkeis der Wärmepumpe feststellbar ist.

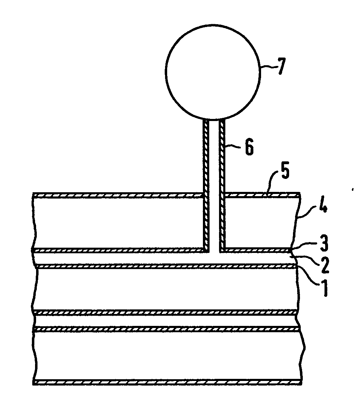

Ein Ausführungsbeispiel der Erfindung ist in der Zeichnung rein schematisch dargestellt, die einen Aufriß einer Teillänge eines Verdampfers im Schnitt zeigt.

In der Zeichnung ist mit 1 ein Innenrohr eines Verdampfers einer im übrigen nicht dargestellten Wasser- Wasser- Wärmepumpe bezeichnet.

Das Innenrohr 1 ist unter Bildung eines Ringraumes 2 von einem Mittelrohr 3 umgeben. Der Ringraum 2 enthält ein unter Druck stehendes, vorzugsweise gut wärmeleitendes Gas, zum Beispiel Chlordifluormethan oder dergleichen.

Das Mittelrohr 3 ist unter Bildung eines Durchflußraumes 4 von einem Mantelrohr 5 umgeben.

Das Innenrohr 1 dient zur Führung von Wasser, zum Beispiel Grund- Brunnen- oder Flußwasser, dem Wärme entzogen werden soll.

Der Durchflußraum 4 ist zum Leiten von Kältemittel vorgesehen.

Umgekehrt kann aber auch das Innenrohr 1 zur Führung des Kältemittels dienen und der Durchflußraum 4 zum Führen des Wassers.

In nicht dargestellter Weise können auch mehrere, jeweils durch ein Innenrohr 1 und ein Mittelrohr 3 gebildete Ringräume 2 vorgesehen sein.

An das Mittelrohr 3 ist ein Rohr 6 angeschlossen, das durch den Durchflußraum 4 und das Mantelrohr 5 hindurch nach außen geführt ist und an seinem freien Ende einen auf Druck ansprechenden Signalgeber 7, zum Beispiel einen Pressostaten aufweist.

In nicht dargestellter Weise kann der Pressostat 7 mit einem Zeitglied gekoppelt sein.

Im Falle des Vorhandenseins mehrerer, jeweils durch ein Innenrohr 1 und ein Mittelrohr 3 gebildeter Ringräume 2 stehen alle Ringräume 2 zweckmäßig in nicht dargestellter Weise untereinander in Verbindung, so daß nur ein einziger Signalgeber 7 für eine Druckänderungsanzeige ausreicht.

Wirkungsweise:

Wenn das Innenrohr 1 oder das Mittelrohr 3, also jeweils das vom Wasser beaufschlagte Rohr, durch den Angriff des Wassers, das je nach Gegend sehr

0166255

aggressiv sein kann, leck werden, tritt aus dem Ringraum 2 Gas in das Wasser aus, wobei im Ringraum 2 ein Druckabfall entsteht. Der Signalgeber 7 spricht auf den Druckabfall an und schaltet, gegebenenfalls verzögert durch das Zeitglied die Wärmepumpe ab. Zugleich mit der Abschaltung der Wärmepumpe kann durch den Signalgeber 7 auch ein optisches und/oder ein akustisches Signal abgegeben werden, Anstelle des Abschaltens der Wärmepumpe können auch nur das optische oder das akustische Signal zur Anzeige des herrschenden Betriebszustandes herangezogen werden.

Die Zeitverzögerung durch das Zeitglied kann zum Beispiel so eingestellt sein, daß die Wärmepumpe zu einem für den Heizbetrieb günstigen Zeitpunkt, unter Umständen erst nach Ablauf von mehreren Stunden oder Tagen abgeschaltet wird.

4 Patentansprüche
1 Figur

Patentansprüche

1. Wasser- Wasser- Wärmepumpe, mit einem Kältemittel-Verdampfer, der in einem Mantelrohr (5) mindestens einen von einem Innenrohr (1) und einem Mittelrohr (3) gebildeten Ringraum (2) und zwischen dem Mittelrohr (3) und dem Mantelrohr (5) einen Durchflußraum (4) aufweist, dadurch gekennzeichnet, daß der Ringraum (2) mit einem unter Druck stehenden Gas gefüllt ist, das einen auf Druckänderungen ansprechenden Signalgeber (7), zum Beispiel einen Pressostaten beaufschlagt und daß das Innenrohr (1) zur Wasserführung ausgebildet ist und der Durchflußraum (4) zur Führung des Kältemittels oder umgekehrt, daß das Innenrohr (1) zur Führung des Kältemittels dient und der Durchflußraum (4) zur Wasserführung.

2. Wärmepumpe nach Anspruch 1, dadurch gekennzeichnet, daß bei Vorhandensein mehrerer jeweils durch ein Innenrohr (1) und ein Mittelrohr (3) gebildeter Ringräume (2) alle Ringräume (2) untereinander in Verbindung stehen.

3. Wärmepumpe nach Anspruch 1 oder 2, dadurch gekennzeichnet, daß der Signalgeber (7) durch ein Leitrohr (6) mit dem Ringraum (2) oder den Ringräumen (2) in Verbindung steht.

4. Wärmepumpe nach einem der Ansprüche 1 bis 3, dadurch gekennzeichnet, daß der Signalgeber (7) mit einem Zeitglied gekoppelt-ist.

Europäisches
Patentamt

**EUROPÄISCHER RECHERCHENBERICHT**

0166255
Nummer der Anmeldung

EP 85 10 6613

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| Y | GB-A-1 438 733  (LOWI)<br>* Seite 2, Zeile 86 - Seite 4, Zeile 55; Figuren 1,2 *<br><br>--- | 1,2 | F 25 B  39/02<br>G 01 M   3/32 |
| Y | US-A-2 864 404  (BRUEGGER)<br>* Spalte 4, Zeile 62 - Spalte 11, Zeile 29; Figuren 1-9 *<br><br>--- | 1,2 | |
| A | GB-A- 804 592  (JOHN THOMPSON WATER TUBE BOILERS)<br>* Seite 1, Zeile 57 - Seite 2, Zeile 29; Figuren 1-3 *<br><br>--- | 1-3 | |
| A | FR-A-1 499 286  (HACKETHAL-DRAHT UND KABEL-WERKE)<br>* Seite 2, linke Spalte, Absatz 1 - Seite 3, rechte Spalte, letzter Absatz; Figuren 1-7 *<br><br>--- | 1,3 | |
| A | GB-A- 606 284  (STEADMAN)<br>* Seite 3, Zeilen 9-61; Figuren 1,2 *<br><br>--- | 1 | F 25 B<br>G 01 M<br><br>RECHERCHIERTE SACHGEBIETE (Int. Cl.4) |
| A | DE-A-2 822 149  (HIHRICHSEN)<br>* Insgesamt *<br><br>--- | 1 | |
| A | US-A-2 146 058  (DOYLE)<br>* Seite 1, linke Spalte, Zeile 54 - Seite 3, linke Spalte, Zeile 54; Figuren 1-7 *<br><br>---                 -/- | 1 | |

Der vorliegende Recherchenbericht wurde für alle Patentansprüche erstellt.

| Recherchenort | Abschlußdatum der Recherche | Prüfer |
|---|---|---|
| DEN HAAG | 19-09-1985 | BOETS A.F.J. |

**0166255**
Nummer der Anmeldung

**Europäisches Patentamt**

**EUROPÄISCHER RECHERCHENBERICHT**

EP 85 10 6613

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 043 383   (RIEDEL) | | |
| A | US-A-2 597 744   (MORRISON) | | |
| A | US-A-3 830 290   (THAMASETT) | | |
| A | FR-A-1 066 959   (FOSTER WHEELER) | | |
| A | FR-A-2 107 868   (INTERATOM) | | |

RECHERCHIERTE SACHGEBIETE (Int. Cl.4)

Der vorliegende Recherchenbericht wurde für alle Patentansprüche erstellt.

| Recherchenort DEN HAAG | Abschlußdatum der Recherche 19-09-1985 | Prüfer BOETS A.F.J. |
|---|---|---|